# EUROPEAN PATENT SPECIFICATION

(11) **EP 1 963 390 B1**
(45) Date of publication and mention of the grant of the patent: **23.06.2010**
(21) Application number: 06845290.3
(22) Date of filing: 12.12.2006
(51) Int. Cl.: C08G 18/22, C08G 18/32, C08G 18/50, C08G 18/66, C08G 18/79

(54) **RIM ELASTOMERS BASED ON ISOCYANURATES OF ISOPHORONE DIISOCYANATE AND PREPOLYMERS THEREOF**
RIM-ELASTOMERE AUF BASIS VON ISOCYANUREATEN VON ISOPHORONDIISOCYANAT UND PREPOLYMERE DAVON
ELASTOMERES RIM A BASE D'ISOCYANURATES DE DIISOCYANATE D ISOPHORONE ET LEURS PREPOLYMERES

(30) Priority: 15.12.2005 US 300837
(43) Date of publication of application: 03.09.2008
(73) Proprietor: Bayer MaterialScience LLC, Pittsburgh, PA 15205-9741 (US)
(72) Inventor: NODELMAN, Neil, H., Upper St. Clair, PA 15241 (US); SUPER, Michael S., Pittsburgh, PA 15213 (US); STEPPAN, David D., Gibsonia, PA 15044 (US)
(74) Representative: Klimiuk, Meike
(86) International application number: PCT/US2006/047378
(87) International publication number: WO 2007/075329

(56) References cited:
- EP-A2- 0 659 792
- US-A- 4 065 410
- US-A- 4 389 454
- US-A- 4 631 298

## Description

The production of polyurethane moldings via the reaction injection molding (i.e. RIM) technique is well known and described in, for example, U.S. Patent 4,218,543. The RIM process involves a technique of filling the mold by which highly reactive, liquid starting components are injected into the mold within a very short time by means of a high output, high pressure dosing apparatus after they have been mixed in so-called "positively controlled mixing heads".

In the production of polyurethane moldings via the RIM process, the reaction mixture generally comprises an A-side based on polyisocyanates and a B-side based on organic compounds containing isocyanate-reactive hydrogen atoms, in addition to suitable chain extenders, catalysts, blowing agents, and other additives. The polyisocyanates which are suitable for a commercial RIM process are the aromatic isocyanates such as, for example, diphenyl methane-4,4'-diisocyanate (i.e. MDI). While various patents broadly disclose cycloaliphatic isocyanates in a long list of isocyanates which are described as suitable for use in a RIM process, few patents have any working examples wherein a cycloaliphatic isocyanate is used.

U.S. Patent 4,772,639 describes a process for the production of polyurethane moldings reacting organic polyisocyanates with organic compounds containing isocyanate-reactive hydrogen atoms in the presence of catalysts and auxiliary agents inside a closed mold. The isocyanate component is based on (a1) mixtures of (i) 1-isocyanate-3,3,5-trimethyl-5-isocyanatomethylcyclohexane (IPDI), and (ii) polyisocyanates containing isocyanurate groups prepared by the trimerization of a portion of the isocyanate groups of 1,6-diisocyanatohexane, or (a2) (i) IPDI and (iii) polyisocyanates containing isocyanurate groups prepared by the trimerization of a portion of the isocyanate groups of a mixture of 1,6-diisocyanatohexane and IPDI. These reaction mixtures are broadly disclosed as being suitable for RIM processing.

U.S. Patent 4,642,320 discloses a process for the preparation of a molded polymer comprising reacting inside a closed mold a reaction mixture comprising (a) an active hydrogen containing material comprising a primary or secondary amine terminated polyether having an average equivalent weight of at least 500, (b) at least one chain extender, and (c) a (cyclo)aliphatic polyisocyanate, polyisothiocyanate, or mixture thereof, wherein the NCX index is from about 0.6 to 1.5. This process requires that component (a) have at least 25%, and preferably 50% of its active hydrogen atoms present in the form of amine hydrogens. All of the examples disclose a system based on a HDI prepolymer with amine terminated polyethers and diethyltoluenediamine at high mold temperatures and long demold times.

U.S. Patent 4,764,543 discloses aliphatic RIM systems that use very fast reacting aliphatic polyamines. This patent is restricted to total polyurea systems based on chain extenders which are cycloaliphatic diamines and polyethers which are amine-terminated polyethers, with an aliphatically bound polyisocyanate.

RIM systems are also disclosed in U.S. Patent 4,269,945. These systems are based on compositions comprising a polyisocyanate, a hydroxyl-containing polyol, and a specific chain extender. The specific chain extender comprises (1) at least one component selected from the group consisting of (a) a hydroxyl-containing material which is essentially free of aliphatic amine hydrogen atoms, and (b) aromatic amine-containing materials containing at least two aromatic amine hydrogen atoms and are essentially free of aliphatic amine hydrogen atoms; and (2) at least one aliphatic amine-containing material having at least one primary amine group and an average aliphatic amine hydrogen functionality of from about 2 to 16. Both aromatic polyisocyanates and (cyclo)aliphatic polyisocyanates are disclosed as being suitable for this process. All of the working examples in this patent use aromatic isocyanates that may be polymeric in nature.

U.S. Patent 5,260,346 also discloses reaction systems for preparing elastomers via the RIM process. These systems require an allophanate modified polyisocyanate, a hydroxyl group containing polyol, and an aromatic polyamine in which at least one of the positions ortho to the amine group is substituted with a lower alkyl substituent.

U.S. Patent 5,502,147 describes (cyclo)aliphatic isocyanate based RIM systems. These (cyclo)aliphatic isocyanates have a viscosity of less than 20,000 mPa·s at 25°C, an NCO functionality of 2.3 to 4.0, and are modified by isocyanurate groups, biuret groups, urethane groups, allophanate groups, carbodiimide groups, oxadiazine-trione groups, uretdione groups, and blends thereof. The B-side comprises a high molecular weight polyol and a low molecular weight chain extender in which the OH:NH ratio is from 1:1 to 25:1.

U. S. Patent 5,502,150, which is commonly assigned, discloses a RIM process which uses a hexamethylene diisocyanate prepolymer having a functionality of less than 2.3, an NCO content of 5 to 25%, and a monomer content of less than 2% by weight. This prepolymer is reacted with a high molecular weight isocyanate-reactive compound, a chain extender selected from diols and aminoalcohols, and a hydroxyl-based crosslinking compound containing no more than one aliphatic amine hydrogen atom.

Light stable polyurethanes are also disclosed in U.S. Patents 5,656,677 and 6,242,555. The polyurethanes of U.S. 5,656,677 comprise the reaction product of a (cyclo)aliphatic isocyanate with a compound containing isocyanate-reactive hydrogen atoms, in the presence of a chain extender and/or crosslinker, and a specific catalyst system. The catalyst system comprises 1) at least one organic lead compound, 2) at least one organic bismuth compound, and/or 3) at least one organic tin compound. The light stable elastomers of U.S. 6,242,555 comprise the reaction product of A) isophorone diisocyanate trimer/monomer mixture having an NCO group content of 24.5 to 34%, with B) an isocyanate-reactive component, in the presence of C) at least one catalyst selected from organolead (II), organobismuth (III) and organotin (IV) compounds.

Advantages of the present invention include (cyclo)aliphatic isocyanate based RIM elastomers can be prepared with good green strength at a 30 second demold and with good physical properties. In addition, polyol blends which are phase stable are formed from the combination of a chain extender comprising 2-methyl-1,3-propanediol, a co-extender comprising a di-primary amine, and a crosslinker comprising an amine-initiated polyol.

### SUMMARY OF THE INVENTION

This invention relates to a process for the production of a polyurethane elastomer and to the resultant elastomers. These elastomers are prepared by a reaction injection molding process.

The process and the product both require a specific reaction mixture. The isocyanate component (A) of this reaction mixture has an NCO group content of 23 to 34% and a functionality of about 2.1 to about 2.5, and comprising:
(1) from about 60 to 100% (preferably 80 to 100%) by weight, based on 100% by weight of (A), of a (cyclo)aliphatic polyisocyanurate having an NCO group content of about 23% to about 34%, a functionality of about 2.1 to 2.5, and comprises the trimerization product of isophorone diisocyanate;
   and
(2) from 0 to about 40% (preferably 0 to 20%) by weight, based on 100% by weight of (A) of an isocyanate-reactive component having from about 1.5 to about 6, preferably from about 2 to about 3 hydroxyl groups capable of reacting with NCO groups of (A)(1), and having a molecular weight of about 60 to about 8,000, preferably 2,000 to 8,000 and more preferably 3,000 to 6,000.

The isocyanate-reactive component (B) required herein comprises:
(1) from about 45 to about 93.5 parts by weight, based on 100 parts by weight of (B), of at least one polyether polyol having a hydroxyl functionality of from about 1.5 to about 4.0, and a number average molecular weight to from about 2,000 to about 8,000,
(2) from about 3 to 40 parts by weight, based on 100 parts by weight of (B), of at least one chain extender having a hydroxyl functionality of 2, a number average molecular weight of from about 62 to about 150, and is free of amine groups (preferably 2-methyl-1,3-propanediol or ethylene glycol);
(3) from about 0.5 to about 3.5 parts by weight, based on 100 parts by weight of (B), of at least one chain extender having about 2 to about 4 amine groups which are primary or secondary amine groups, a number average molecular weight of from about 60 to about 400, and is free of hydroxyl groups (preferably 1,5-diamino-2-methylpentane);
   and
(4) from about 3 to about 20 parts by weight, based on 100 parts by weight of (B), of at least one crosslinking agent having from about 3 to about 8 hydroxyl functional groups (preferably secondary OH groups), from 1 to 4 tertiary amine groups, a number average molecular weight of from about 130 to about 800, and is free of primary and secondary amine groups, (preferably a propoxylated polyether polyol initiated from a diamine compound).

Components (A) and (B) are reacted in the presence of:
(C) a catalyst system comprising at least one metal based catalyst, and, optionally,
(D) one or more additives comprising UV stabilizers and/or antioxidant stabilizers,
wherein the relative amounts of (A) and (B) are such that the Isocyanate Index of the reaction mixture ranges from about 90 to about 110.

The present invention also relates to phase stable polyol blends. These phase stable polyol blends comprise:
(1) from about 45 to about 93.5 parts by weight, based on 100 parts by weight of (1), (2), (3) and (4), of at least one polyether polyol having a functionality of from about 1.5 to about 4.0, and a number average molecular weight to from about 2,000 to about 8,000;
(2) from about 3 to 40 parts by weight, based on 100 parts by weight of (1), (2), (3) and (4), of a chain extender comprising 2-methyl-1,3-propanediol;
(3) from about 0.5 to about 3.5 parts by weight, based on 100 parts by weight of (1), (2), (3) and (4), of at least one chain extender having about 2 to about 4 (preferably about 2) amine groups which are primary or secondary amine groups, a number average molecular weight of from about 60 to about 400, and is free of hydroxyl groups (preferably 1,5-diamino-2-methylpentane);
   and
(4) from about 3 to about 20 parts by weight, based on 100 parts by weight of (1), (2), (3) and (4), of at least one crosslinking agent having from about 3 to about 8 hydroxyl functional groups (preferably secondary OH groups), from 1 to 4 tertiary amine groups, has a number average molecular weight of from about 130 to about 800 (preferably about 200 to abut 500), and is free of primary and secondary amine groups, (preferably a propoxylated polyether polyol initiated from a diamine compound).

As used herein, the term "phase stable" means that these polyol blends are physically stable, with no signs of layering, after being stored for up to 3 months at room temperature.

### DETAILED DESCRIPTION OF THE INVENTION

Suitable (cyclo)aliphatic polyisocyanates to be used as component (A) in the present invention include (1) isocyanurates of isophorone diisocyanate.

Polyisocyanurates or polyisocyanates which contain isocyanurate groups, i.e. the so-called trimers of polyisocyanates are suitable as component (A) herein. Suitable trimers of polyisocyanates include compounds such as those which can be prepared as described, for example, in U.S. Patent 4,288,586, 4,324,879, 5,656,677 and 6,242,555; European Patents 3,765, 10,589 and 47,452; and German Offenlegungsschriften 2,616,416.

It is preferred that the trimerized isophorone diisocyanate (A)(1) comprise from about 25 to about 40% by weight of trimer, with the balance being monomeric isophrone diisocyanate. The isocyanato-isocyanurates have an average NCO functionality of about 2.1 to about 2.5, preferably of about 2.15 to about 2.40, and an NCO content of 23 to 34% and preferably 26 to 31 % by weight.

In accordance with the present invention, the polyisocyanate component (A) may comprise a prepolymer of the polyisocyanurates of isophorone diisocyanate as described above. Prepolymers are prepared by reacting (1) the isocyanurates (or trimerized isocyanates) of isophorone diisocyanate, with (2) an isocyanate-reactive component which contains from about 1.5 to about 6 hydroxyl groups, and preferably about 2 to about 3 hydroxyl groups, which are capable of reacting with NCO groups of (1). These isocyanate-reactive components typically have molecular weights in the range of about 60 to about 8,000.

Examples of suitable isocyanate-reactive compounds to be used as (A)(2) herein include polyether polyols, polyester polyols, polycaprolactones, glycols, low molecular weight polyols, polythioethers, polycarbonates, polyacetal, etc., and mixtures thereof. All of these compounds are known in the field of polyurethane chemistry.

Suitable polyether polyols may be prepared by the reaction of suitable starting compounds which contain reactive hydrogen atoms with alkylene oxides such as, for example, ethylene oxide, propylene oxide, butylene oxide, styrene oxide, tetrahydrofuran, epichlorohydrin, and mixtures thereof. Suitable starting compounds containing reactive hydrogen atoms include compounds such as, for example, ethylene glycol, propylene glycol, butylene glycol, hexanediol, octanediol, neopentyl glycol, cyclohexandimethanol, 2-methyl-1,3-propanediol, 2,2,4-trimethyl-1,3-pentanediol, triethylene glycol, tetraethylene glycol, polyethylene glycol, dipropylene glycol, polypropylene glycol, dibutylene glycol, polybutylene glycol, glycerine, trimethylolpropane, pentaerythritol, water, methanol, ethanol, 1,2,6-hexane triol,1,2,4-butane triol, trimethylol ethane, mannitol, sorbitol, methyl glycoside, sucrose, phenol, resorcinol, hydroquinone, 1,1,1- or 1,1,2-tris-(hydroxyphenyl)-ethane, etc.

Suitable polyester polyols include the reaction products of polyhydric, preferably dihydric alcohols (optionally in the presence of trihydric alcohols), with polyvalent, preferably divalent, carboxylic acids. Instead of using the free carboxylic acids, it is also possible to use the corresponding polycarboxylic acid anhydrides or corresponding polycarboxylic acid esters of lower alcohols or mixtures thereof for producing the polyesters. The polycarboxylic acids may be aliphatic, cycloaliphatic, aromatic, and/or heterocyclic and may be unsaturated or substituted, for example, by halogen atoms. The polycarboxylic acids and polyols used to prepare the polyesters are known and described for example in U.S. Patents 4,098,731 and 3,726,952.

A specific group of polyester polyols which are suitable for the preparation of isocyanate prepolymers in accordance with the present invention include those made from lactones, e. g. ε -caprolactone or hydroxycarboxylic acids, e.g. omega-hydroxycaproic acid. As is known to one skilled in the art of polyurethane chemistry, polyester polyols can be prepared by reacting lactone with a glycol (i.e. diol or triol) to form a polyester polyol suitable for making prepolymers in accordance with the present invention.

Suitable polythioethers, polyacetals, polycarbonates and other polyhydroxyl compounds are also disclosed in the above-identified U.S. Patents. Finally, representatives of the many and varied compounds which may be used in accordance with the invention may be found, for example, in High Polymers, Volume XVI, "Polyurethanes, Chemistry and Technology," by Saunders-Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Hochtlen, Carl Hanser Verlag, Munich, 1966, pages 45-71.

Suitable low molecular weight polyols for preparing prepolymers include, for example, diols, triols, tetrols, and alkoxylation products of these. These include 2-methyl-1,3-propanediol, ethylene glycol, 1,2- and 1,3-propanediol, 1,3- and 1,4- and 2,3-butanediol, 1,6-hexanediol, 1,10-decanediol, diethylene glycol, triethylene glycol, tetraethylene glycol, dipropylene glycol, tripropylene glycol, glycerol, trimethylolpropane, neopentyl glycol, cyclohexanedimethanol, 2,2,4-trimethylpentane-1,3- diol, pentaerythritol, etc. Alkoxylation products of these same compounds may also be used to prepare prepolymers. In accordance with the present invention, preferred isocyanate-reactive compounds to form prepolymers are trimethylolpropane and tripropylene glycol.

In accordance with the present invention, residues of isocyanates which may inherently result in the production of the above described isocyanates after treatment of the residue, are not suitable for the isocyanate component herein. Such residues are undesirable by-products of the process for the production of the isocyanate components.

In accordance with the present invention, component (B), the isocyanate-reactive component comprises:
(1) from about 45 to about 93.5, preferably from about 60 to about 87 parts by weight, based on 100 parts by weight of (B), of at least one polyether polyol having a hydroxyl functionality of from about 1.5 to about 4.0 and a number average molecular weight of from about 2,000 to about 8,000,
(2) from about 3 to about 40, preferably from about 5 to about 30 parts by weight, based on 100 parts by weight of (B), of at least one chain extender having a hydroxyl functionality of 2, a number average molecular weight of from about 62 to about 150, and is free of amine groups (preferably 2-methyl-1,3-propanediol or ethylene glycol);
(3) from about 0.5 to about 3.5, preferably from about 0.5 to about 2.0 parts by weight, based on 100 parts by weight of (B), of at least one chain extender having about 2 to about 4 (preferably about 2) amine groups which are primary or secondary amine groups, a number average molecular weight of from about 60 to about 400, and is free of hydroxyl groups (preferably 1,5-diamino-2-methylpentane);
(4) from about 3 to about 20, preferably from about 5 to about 10 parts by weight, based on 100 parts by weight of (B), of at least one crosslinking agent having from about 3 to about 8 hydroxyl functional groups (preferably secondary OH groups), from 1 to 4 tertiary amine groups, a number average molecular weight of from about 130 to about 800 (preferably 200 to 500), and is free of primary and secondary amine groups, (preferably a propoxylated polyether polyol initiated from a diamine compound).

The sum of the parts by weight of components (B)(1), (B)(2), (B)(3) and (B)(4) totals 100 parts by weight of component (B).

Suitable polyether polyols to be used as component (B)(1) herein have a molecular weight of at least about 2,000, preferably at least about 3,000 and more preferably at least about 4,000. These polyether polyols also typically have a molecular weight of less than or equal to about 8,000, preferably less than or equal to about 6,000. The polyether polyols may have a molecular weight ranging between any combination of these upper and lower values, inclusive, e.g. from about 2,000 to about 8,000, preferably from about 3,000 to about 6,000, and more preferably from about 4,000 to about 6,000.

These polyether polyols also typically have a hydroxyl functionality of at least about 1.5 and preferably of at least about 1.8. The polyether polyols also have a hydroxyl functionality of less than or equal to about 4.0 and preferably less than or equal to about 3.0. In addition, these polyether polyols may have a hydroxyl functionality between any combination of these upper and lower values, inclusive, e.g. from about 1.5 to about 4.0, and preferably from about 1.8 to about 3.0.

The high molecular weight polyethers suitable for use in accordance with the invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Examples of suitable alcohols and amines include the low molecular weight chain extenders set forth hereinafter, propylene glycol, glycerin, ethylene glycol, triethanolamine, water, trimethylolpropane, bisphenol A, sucrose, aniline, ammonia, ethanolamine and ethylene diamine. It is preferred to use polyethers which contain substantial amounts of primary hydroxyl groups in terminal positions (greater than 80% by weight, based on all of the terminal hydroxyl groups present in the polyether).

Polyether polyols are used as component (B)(1) in the invention. Preferred polyethers include, for example, those compounds based on di- or tri-functional starters such as, for example, water, ethylene glycol, propylene glycol, glycerin, trimethylolpropane, or triethanolamine. These preferred compounds include copolymers of ethylene oxide and propylene oxide with greater than 12% by weight of the oxides being ethylene oxides.

Suitable chain extenders to be used as component (B)(2) in accordance with the present invention typically have a molecular weight of at least about 62. These chain extenders also typically have a molecular weight of less than or equal to about 150, and preferably less than or equal to about 110. The chain extenders may have a molecular weight ranging between any combination of these upper and lower values, inclusive, e.g. from about 62 to about 150, and preferably from about 62 to about 110.

Compounds suitable for use as component (B)(2) herein contain 2 hydroxyl groups which are reactive with isocyanate groups. In addition, these compounds are free of isocyanate-reactive amine groups.

Suitable organic diols to be used as component (B)(2) according to the invention include, for example, diols such as, for example, 2-methyl-1,3-propanediol, ethylene glycol, 1,2- and 1,3-propanediol, 1,3- and 1,4- and 2,3-butanediol, 1,6-hexanediol, 1,10-decanediol, diethylene glycol, triethylene glycol, tetraethylene glycol, dipropylene glycol, tripropylene glycol, neopentyl glycol, cyclohexane-dimethanol, and 2,2,4-trimethylpentane-1,3- diol. Preferred diols include, for example, ethylene glycol and 2-methyl-1,3-propanediol.

Suitable chain extenders to be used as component (B)(3) in accordance with the present invention have a molecular weight of at least about 60. These chain extenders also typically have a molecular weight of less than or equal to about 400, and preferably less than or equal to about 250. The chain extenders may have a molecular weight ranging between any combination of these upper and lower values, inclusive, e.g. from about 60 to about 400, and preferably from about 60 to about 250.

Chain extenders (B)(3) of the invention contain from about two to about four amine groups, preferably about two amine groups, which may be either primary or secondary amine groups (or a combination of primary and secondary amine groups). Also, these compounds should be free of hydroxyl groups.

Some examples of suitable compounds to be used as chain extenders (B)(3) in accordance with the present invention include, for example, 2-methyl-1,5-pentane diamine, ethylene diamine, 1,3-diaminopropane, 1,4-diaminobutane, isophoronediamine, diethylenetriamine, diaminocyclohexane, hexamethylenediamine, methyliminobispropylamine, iminobispropylamine, bis(aminopropyl)piperazine, aminoethyl piperazine, 1,2-diaminocyclo-hexane, polyoxyalkylenepolyamines (preferably polyoxyalkylene diamines and polyoxyalkylene triamines), bis-(p-aminocyclohexyl)methane, triethylenetetramine, mixtures thereof, and the like.

Other suitable amines include, for example,1,8-p-diaminomenthane, bis(4-amino-3-methylcyclohexyl)-methane, bis(4-amino-3,5-dimethyl-cyclohexyl)-methane, bis(4-amino-2,3,5-trimethylcyclohexyl)methane, 1,1-bis(4-aminocyclohexyl)propane, 2,2-(bis(4-aminocyclohexyl)propane, 1,1-bis(4-aminocyclohexyl)ethane, 1,1-bis(4-aminocyclohexyl)butane, 2,2-bis(4-aminocyclohexyl)butane, 1,1-bis(4-amino-3-methylcyclohexyl)ethane, 2,2-bis(4-amino-3-methylcyclohexyl)propane, 1,1-bis(4-amino-3,5-dimethylcyclohexyl)ethane, 2,2-bis(4-amino-3,5-dimethylcyclohexyl)propane, 2,2-bis(4-amino-3,5-dimethylcyclohexyl)butane, 2,4-diaminodicyclohexylmethane, 4-aminocyclohexyl-4-amino-3-methylcyclohexylmethane, 4-amino-3,5-dimethylcyclohexyl-4-amino-3-methylcyclohexylmethane, and 2-(4-amino-cyclohexyl)-2-(4-amino-3-methylcyclohexyl)methane.

Also suitable amines for component (B)(3) include aromatic diamine compounds containing two primary amine groups. These compounds are commonly known and described as aromatic diamine chain extenders having a molecular weight within the above described range. The preferred aromatic diamine compounds contain exclusively aromatically bound primary amino groups, and preferably, may also contain alkyl and heteroalkyl substituents. Examples of such diamines include 1,4-diaminobenzene; 2,4- and/or 2,6-diaminotoluene; 2,4'- and/or 4,4'-diaminodiphenylmethane; 3,3'-dimethyl-4,4'-diaminodiphenylmethane; 3,3'-dichloro-4,4'-diaminodiphenylmethane (MOCA); 1-methyl-3,5-bis(methylthio)-2,4- and/or-2,6-diaminobenzene; 1,3,5-triethyl-2,4-diaminobenzene; 1,3,5-triisopropyl-2,4-diaminobenzene; 1-methyl-3,5-diethyl-2,4- and/or-2,6-diaminobenzene (also known as 3,5-diethyl-2,4-and/or-2,6-toluenediamine, or DETDA); 3,5-dithiomethyl-2,4-diamino toluene (i.e. ETHACURE 300); 4,6-dimethyl-2-ethyl-1,3-diaminobenzene; 3,5,3',5'-tetraethyl-4,4-diaminodiphenylmethane; 3,5,3',5'-tetraisopropyl-4,4'-diaminodiphenylmethane; 3,5-diethyl-3',5'-diisopropyl-4,4'-diaminodiphenylmethane; 2,4,6-triethyl-m-phenylenediamine (TEMPDA); 3,5-diisopropyl-2,4-diaminotoluene; 3,5-di-sec-butyl-2,6-diaminotoluene; 3-ethyl-5-isopropyl-2,4-diaminotoluene; 4,6-diisopropyl-m-phenylenediamine; 4,6-di-tert-butyl-m-phenylenediamine; 4,6-diethyl-m-phenylenediamine; 3-isopropyl-2,6-diaminotoluene; 5-isopropyl-2,4-diaminotoluene; 4-isopropyl-6-methyl-m-phenylenediamine; 4-isopropyl-6-tert-butyl-m-phenylenediamine; 4-ethyl-6-isopropyl-m-phenylenediamine; 4-methyl-6-tert-butyl-m-phenylenediamine; 4,6-di-sec-butyl-m-phenylenediamine; 4-ethyl-6-tertbutyl-m-phenylerie-diamine; 4-ethyl-6-sec-butyl-m-phenylenediamine; 4-ethyl-6-isobutyl-m-phenylenediamine; 4-isopropyl-6-isobutyl-m-phenylenediamine; 4-isopropyl-6-sec-butyl-m-phenylenediamine; 4-tert-butyl-6-isobutyl-m-phenylenediamine; 4-cyclopentyl-6-ethyl-m-phenylenediamine; 4-cyclohexyl-6-isopropyl-m-phenylenediamine; 4,6-dicyclopentyl-m-phenylenediamine; 2,2',6,6'-tetraethyl-4,4'-methylenebisaniline; 2,2',6,6'-tetraisopropyl-4,4'-methylenebisaniline (methylenebis diisopropylaniline); 2,2',6,6'-tetra-sec-butyl-4,4'-methylenebisaniline; 2,2'-dimethyl-6,6'-di-tert-butyl-4,4'-methylenebisaniline; 2,2'-di-tert-butyl-4,4'-methylenebisaniline; and 2-isopropyl-2',6'-diethyl-4,4'-methylenebisaniline. Such diamines may, of course, also be used as mixtures.

A preferred aromatic diamine compound for (B)(3) in which there are two primary amine groups comprises an isomer of diethyltoluenediamine (i.e. DETDA), a mixture of isomers of diethyltoluenediamine, an isomer of di-(methylthio)toluenediamine (i.e. ETHACURE 300), and a mixture of isomers of di-(methylthio)toluenediamine. A preferred isomeric mixture comprises 75 to 81 % by wt. of the 2,4-isomer of diethyltoluenediamine and 21 to 25% by wt. of the 2,6-isomer of diethyltoluenediamine. This is commercially available under the tradename Ethacure 100 from Albermarle Corporation. The color stabilized version of Ethacure 100 which is available under the tradename Ethacure 100LC is preferred.

A particularly preferred compound to be used as (B)(3) herein is 1,5-diamino-2-methylpentane.

Suitable crosslinking agents to be used as component (B)(4) in accordance with the present invention have a molecular weight of at least about 200 to about 800, and preferably less than or equal to about 500. The crosslinking agents have a molecular weight, preferably from about 200 to about 500.

Crosslinking agents (B)(4) of the invention contain about 3 to about 8 hydroxyl groups which are capable of reacting with isocyanate groups. It is preferred that compounds used as (B)(4) contain from about 3 to about 6 hydroxyl groups. In addition, compounds used as (B)(4) contain from 1 to 4 tertiary amine groups, and preferably from 1 to 3 tertiary amine groups. These compounds should be free of primary amine groups and of secondary amine groups.

Examples of such compounds include, for example, various alkoxylation products of amine containing starters or initiators. Such amine starters or initiators include compounds such as, for example, ethylene diamine, 1,3-diaminopropane, 1,4-diaminobutane, isophoronediamine, 2-methyl-1,5-pentane diamine, toluene diamine, diethylenetriamine, diaminocyclohexane, hexamethylenediamine, methyliminobispropylamine, imiriobispropylamine, bis(aminopropyl)piperazine, aminoethyl piperazine, 1,2-diaminocyclohexane, polyoxyalkylenepolyamines (preferably polyoxyalkylene diamines and polyoxyalkylene triamines), bis-(p-aminocyclohexyl)methane, triethylenetetramine, mixtures thereof, etc. These initiators are alkoxylated by reacting with a suitable alkylene oxide such as, for example, ethylene oxide, propylene oxide, butylenes oxide, stryrene oxide, etc. to the desired functionality and molecular weight as described above. Propylene oxide is a preferred alkylene oxide. Propoxylated polyether polyols initiated from diamine compounds are preferred. A most preferred crosslinking agent is propoxylated ethylene diamine having a hydroxyl functionality of 4 and a molecular weight of about 350.

In accordance with the present invention, at least one catalyst is present. Suitable catalysts include metal based catalysts including, for example, metal carboxylates, metal halides and metal-sulfur catalysts, other carboxylates such as ammonium carboxylates, as well as tertiary amines, etc., and mixtures thereof. Of the metal halides, the metal chlorides are preferred. These catalysts may be used alone or as a combination with at least one tertiary amine catalyst.

Some examples of metal carboxylate catalysts which are suitable for use in accordance with the present invention include for example, tin carboxylates such as, for example, dimethyltin dilaurate, dibutyltin dilaurate and dimethyltin dineodecanoate; bismuth carboxylates, such as, for example, bismuth trineodecanoate and bismuth 2-ethylhexanoate, as well as other metal carboxylates such as lead 2-ethylhexanoate. Some suitable examples of metal halides include, for example, tin halides and metal chlorides, and especially tin chlorides such as, for example, dimethyltin dichloride. Suitable examples of ammonium carboxylates include, for example, trimethylhydroxyethylammonium-2-ethylhexanoate (i.e. Dabco TMR). Tin carboxylates such as, for example, dimethyltin dilaurate and dimethyltin dineodecanoate, and bismuth carboxylates such as, for example, bismuth trineodecanoate and bismuth 2-ethylhexanoate, are preferred catalysts. Metal chlorides such as, for example, dimethyltin dichloride are also preferred catalysts.

Suitable compounds to be used as tin-sulfur catalysts include, for example, dialkyltin dilaurylmercaptides such as, for example, dibutyltin dilaurylmercaptide and dimethyltin dilaurylmercaptide.

Some examples of suitable tertiary amine catalysts include, for example, triethylamine, triethylenediamine, tributylamine, N-methylmorpholine, N-ethylmorpholine, triethanolamine, triisopropanolamine, N-methyldiethanolamine, N-ethyldiethanolamine, and N,N-dimethylethanolamine.

Also, suitable catalysts include, for example, acid blocked catalysts such as, acid blocked 1,8-diaza-7-bicyclo[5.4.0]undec-7-ene (i.e. DBU), 1,5-diazabicyclo[4.4.0]-dec-5-ene (i.e. DBD), 1,5-diazabicyclo[4.3.0]non-5-ene (i.e. DBN), 1,8-diazabicyclo[7.5.0]tetradec-8-ene, 1,8-diazabicyclo-[7.4.0]tridec-8-ene, 1,8-diazabicyclo[7.3.0]dodec-8-ene, etc. Suitable blocking agents include phenol, 2-ethylhexanoic acid, formic acid, oleic acid, etc.

The catalyst system herein comprises one or more metal catalyst. Preferred metal catalysts include a combination of dimethyltin di-2-ethylhexanoate and bismuth tri-2-ethylhexanoate.

The total quantity of catalyst used herein typically ranges from about 0.3 to about 1.5%, preferably from about 0.5 to about 1.0%, based on 100% by weight of the total system. The use of "total system" here means the combined weight of the A-side and the B-side, including additives.

Optional additives to be included in the present invention as component (D) include, for example, surface-active additives such as emulsifiers and foam stabilizers. Examples include N-stearyl-N',N'-bis-hydroxyethyl urea, oleyl polyoxyethylene amide, stearyl diethanol amide, isostearyl diethanolamide, polyoxyethylene glycol monoleate, a pentaerythritol/adipic acid/oleic acid ester, a hydroxy ethyl imidazole derivative of oleic acid, N-stearyl propylene diamine and the sodium salts of castor oil sulfonates or of fatty acids. Alkali metal or ammonium salts of sulfonic acid such as dodecyl benzene sulfonic acid or dinaphthyl methane sulfonic acid and also fatty acids may also be used as surface-active additives.

Suitable foam stabilizers include polyether siloxanes. The structure of these compounds is generally such that a copolymer of ethylene oxide and/or propylene oxide is attached to a polydimethyl siloxane radical. Such foam stabilizers are described, for example, in U.S. Patent 2,764,565. In addition to the catalysts and surface-active agents, other additives which may be used in the molding compositions of the present invention include known blowing agents including nitrogen, cell regulators, flame retarding agents, plasticizers, antioxidants, UV stabilizers, adhesion promoters, dyes, fillers and reinforcing agents such as glass in the form of fibers or flakes or carbon fibers. Suitable antioxidants include, for example, aromatic phosphates such as, for example tris(nonylphenyl)phosphite (i.e. Weston TNPP), and compounds such as triethylene glycol bis-3-(3'-tert-butyl-4'-hydroxy-5'-methylphenyl)-propionate (i.e. Irganox 245), etc. Suitable UV stabilizers include, for example, bis(1,2,2,6,6-pentamethyl-4-piperidinyl)sebacate (i.e. Tinuvin 765), 2-(2H-benzotriazol-2-yl)-4,6-bis(1,1-dimethy-propyl)phenol (i.e. Tinuvin 328), etc. However, any of the known antioxidants and/or UV stabilizers may be used. As set forth hereinabove, specific advantages have been found in reaction mixtures containing antioxidants and/or UV stabilizers have been added.

It is also possible to use the known internal mold release agents, such as, for example, zinc stearate, in the RIM process of the invention. As is known to one of ordinary skill in the art, in the RIM process, an isocyanate, and active hydrogen containing compounds are mixed and injected into molds, wherein the reactants are allowed to react fully.

The molded products of the present invention are prepared by reacting the components in a closed mold via the RIM process. The compositions according to the present invention may be molded using conventional processing techniques at isocyanate indexes ranging from about 90 to 110 (preferably from 95 to 105). By the term "Isocyanate Index" (also commonly referred to as NCO index), is defined herein as the equivalents of isocyanate, divided by the total equivalents of isocyanate-reactive hydrogen containing materials, multiplied by 100.

In general, in a RIM process, two separate streams are intimately mixed under high pressure and subsequently injected into a suitable closed mold, although it is possible to use more than two streams. The first stream contains the polyisocyanate component, optionally with additives such as catalysts, antioxidants, etc., while the second stream contains the isocyanate reactive components and any other additives which are to be included.

The following examples further illustrate details for the process of this invention. Unless otherwise noted, all temperatures are degrees Celsius and all parts and percentages are parts by weight and percentages by weight, respectively.

### EXAMPLES

The following components were used in the working examples of the present application:
- Iso A:: a trimer of isophorone diisocyanate having an NCO group content of about 29.3% and a functionality of about 2.2, and prepared by the partial trimerization of isophorone diisocyanate in the presence of trimethylbenzylammonium hydroxide catalyst, to a trimer to monomer ratio of about 65 weight % to 35 weight %
- Polyol A:: a glycerine started polyoxypropylene polyoxyethylene polyether polyol, having a nominal functionality of 3 and a number average molecular weight of about 4740
- EG:: ethylene glycol
- MP-Diol:: 2-methyl-1,3-propanediol
- DEOA:: diethanolamine
- Dytek A:: 1,5-diamino-2-methylpentane
- Polyol B:: an ethylene diamine propoxylated polyether polyol having a functionality of about 4 and a number average molecular weight of about 350
- Catalyst A:: bismuth tri-2-ethylhexanoate, commercially available as Coscat 28 from Cambrex
- Catalyst B:: lead di-2-ethylhexanoate, commercially available as lead octoate from Shepherd Chemical Co.
- Catalyst C:: a phenol salt of 1,8-diazadicyclo(5.4.0)undecene, commercially available as Polycat SA-1 from Air Products
- Catalyst D:: dimethyltin dineodecanoate, commercially available as Cotin 280 from Cambrex
- Irganox 245:: triethylene glycol bis-3-(3'-tert-butyl-4'hydroxy-5'-methyl- phenyl)propionate, an antioxidant that is commercially available from Ciba-Geigy Inc.
- Tinuvin 328:: 2-(2H-benzotriazol-2-yl)-4,6-bis(1,1-dimethylpropyl)phenol, an UV stabilizer, commercially available from Ciba-Geigy Inc.
- Tinuvin 765:: bis(1,2,2,6,6-pentamethyl-4-piperidinyl)sebacate, a UV stabilizer, commercially available from Ciba-Geigy Inc.
- DR-0217:: a black paste, commercially available from Plasticolors as DR-0217
- Baylith L Powder:: a zeolite (drying agent), commercially available from Bayer BMS LLC
- Weston TNPP:: tris(nonylphenyl)phosphite from GE Specialties

### General Procedure:

The components described above were used to produce reaction injected molded articles. The specific materials and the amounts of those materials used are reported in Tables 1 and 3 which follow. Example 1 is a comparative example.

The polyurethane-forming systems of Examples 1-9 were injected using a LK-06 RIM machine, which is a Hennecke RIM-DO-MAT with a Hennecke MQ-8 mixhead. The isocyanate-reactive materials and various additives were put into the B-side of the machine, and the appropriate quantities of the isocyanate component were loaded into the A-side. The B-side was preheated to 45°C and the A-side was heated to 45°C. The materials were injected at an injection pressure of 175 bar and an injection rate of 177 grams/sec. The material was injected into a flat plaque aluminum mold of 3 x 200 x 300 mm heated to about 80°C. About 210 g of reaction mixture was shot into the mold and the trimmed plaque weighed about 180 g. After a 30 second dwell time, the part was demolded. Physical properties were determined in accordance with ASTM standards.

The following ASTM test methods were used in the working examples of the present application. Physical properties for Examples 1-9 are reported in Tables 2 and 4.

| **ASTM Tests** | |
|---|---|
| **Property** | **ASTM Test Number** |
| Flexural Modulus | D 3489 (D 790 Method I) |
| Shore A Hardness | D2240 |
| Shore D Hardness | D2240 |
| Die C Tear Strength | D624 |
| Split Tear Strength | D624 |
| Tensile Strength | D412 |
| Ultimate % Elongation | D412 |

**TABLE 1:**

| Example | Example 1* | Example 2 | Example 3 | Example 4 | Example 5 |
|---|---|---|---|---|---|
| Polyol A | 82.9 | 79.7 | 79.5 | 77.4 | 77.6 |
| EG | 7.5 | 7.5 | 7.5 | | |
| MP Diol | | | | 9.6 | 9.6 |
| DEOA | 3.5 | | | | |
| Dytek A | | 1.0 | 1.0 | 1.0 | 1.0 |
| Polyol B | | 5.9 | 5.9 | 5.9 | 5.9 |
| Irganox 245 | 0.5 | 0.8 | 0.5 | 0.5 | 0.8 |
| Tinuvin 328 | 0.5 | | 0.5 | 0.5 | |
| DR-0217 | 4.2 | 4.2 | 4.2 | 4.2 | 4.2 |
| Baylith L | 3.0 | 3.0 | 3.0 | 3.0 | 3.0 |
| Catalyst A | | | | | |
| Catalyst B | 0.4 | 0.4 | 0.4 | 0.4 | 0.4 |
| Catalyst C | 0.5 | 0.5 | 0.5 | 0.5 | 0.5 |
| | | | | | |
| Iso A | 56.87 | 54.2 | 54.24 | 49.96 | 49.92 |
| Catalyst D | 0.248 | 0.226 | 0.236 | 0.217 | 0.208 |
| Tinuvin 765 | 0.464 | 2.12 | 0.443 | 0.408 | 1.953 |
| Weston TNPP | 4.301 | | 4.102 | 3.779 | |
| | | | | | |
| NCO Index | 100 | 100 | 100 | 100 | 100 |
| Gel Time (sec) | 4 | 4 | 4 | 4 | 5 |

| | | | | | |
|---|---|---|---|---|---|
| ^{*}-comparative | | | | | |

**TABLE 2:**

| Example | Example 1 | Example 2 | Example 3 | Example 4 | Example 5 |
|---|---|---|---|---|---|
| Density (kg/m³) | 1113 | 1057 | 1105 | 1081 | 1100 |
| Hardness Shore A | 80 | 88 | 90 | 90 | 92 |
| Hardness Shore D | 25 | 33 | 34 | 35 | 33 |
| Elongation (%) | 252 | 230 | 250 | 219 | 236 |
| Tensile Strength (MPa) | 13.1 | 15.2 | 15.5 | 12.9 | 13.8 |
| Die C Tear (N/cm) | 418 | 405 | 455 | 418 | 438 |
| Split Tear (N/cm) | 88 | 89 | 91 | 111 | 121 |
| Flex Modulus (MPa) | 22 | 53 | 54 | 55 | 65 |

**TABLE 3:**

| Example | Example 1 | Example 6 | Example 7 | Example 8 | Example 9 |
|---|---|---|---|---|---|
| Polyol A | 82.9 | 79.9 | 77.8 | 80.1 | 78.0 |
| EG | 7.5 | 7.5 | | 7.5 | |
| MP Diol | | | 9.6 | | 9.6 |
| DEOA | 3.5 | | | | |
| Dytek A | | 1.0 | 1.0 | 1.0 | 1.0 |
| Polyol B | | 5.9 | 5.9 | 5.9 | 5.9 |
| Irganox 245 | 0.5 | 0.5 | 0.5 | 0.5 | 0.5 |
| Tinuvin 328 | 0.5 | 0.5 | 0.5 | | |
| DR-0217 | 4.2 | 4.2 | 4.2 | 4.2 | 4.2 |
| Baylith L | 3.0 | 3.0 | 3.0 | 3.0 | 3.0 |
| Catalyst A | | 0.5 | 0.5 | 0.5 | 0.5 |
| Catalyst B | 0.4 | | | | |
| Catalyst C | 0.5 | | | | |
| | | | | | |
| Iso A | 56.87 | 53.98 | 49.71 | 53.94 | 49.67 |
| Catalyst D | 0.248 | 0.474 | 0.216 | 0.452 | 0.416 |
| Tinuvin 765 | 0.464 | 0.474 | 0.433 | 2.119 | 1.952 |
| Weston TNPP | 4.301 | 4.262 | 3.762 | | |
| | | | | | |
| Iso Index | 100 | 100 | 100 | 100 | 100 |
| Gel Time (Sec) | 4 | 11 | 11 | 12 | 13 |

**TABLE 4:**

| Example | Example 1 | Example 6 | Example 7 | Example 8 | Example 9 |
|---|---|---|---|---|---|
| Density (Kg/m³) | 1113 | 1087 | 1091 | 1085 | 1100 |
| Hardness Shore A | 80 | 90 | 86 | 94 | 92 |
| Hardness Shore D | 25 | 34 | 28 | 36 | 35 |
| Elongation (%) | 252 | 250 | 266 | 251 | 230 |
| Tensile Strength (MPa) | 13.1 | 14.4 | 11.7 | 14.4 | 12.0 |
| Die C Tear (N/cm) | 418 | 447 | 388 | 406 | 449 |
| Split Tear (N/cm) | 88 | 94 | 118 | 132 | 128 |
| Flex Modulus (MPa) | 22 | 52 | 35 | 83 | 67 |

**TABLE 5: Polyol Blend Compatibility Study**

| Example | Example 10 | Example 11 | Example 12 | Example 13 |
|---|---|---|---|---|
| Polyol A | 79.5 | 77.4 | 79.9 | 77.8 |
| EG | 7.5 | | 7.5 | |
| MP Diol | | 9.6 | | 9.6 |
| Dytek A | 1.0 | 1.0 | 1.0 | 1.0 |
| Polyol B | 5.9 | 5.9 | 5.9 | 5.9 |
| Catalyst A | | | 0.5 | 0.5 |
| Catalyst B | 0.4 | 0.4 | | |
| Catalyst C | 0.5 | 0.5 | | |
| Irganox 245 | 0.5 | 0.5 | 0.5 | 0.5 |
| Tinuvin 328 | 0.5 | 0.5 | 0.5 | 0.5 |
| | | | | |
| Appearance | Cloudy with phase separation | Clear | Cloudy but translucent | Clear with slight haze |

## Claims

1. A process for the production of a polyurethane elastomer comprising reacting a reaction mixture by a reaction injection molding technique, wherein the reaction mixture comprises:
(A) an isocyanate component having an NCO group content of 23 to 34% and a functionality of about 2.1 to about 2.5, and comprising:
(1) from about 60% to 100% by weight, based on 100% by weight of (A), of a (cyclo)aliphatic polyisocyanurate having an NCO group content of about 23% to about 34%, a functionality of about 2.1 to 2.5, and which comprises the trimerization product of isophorone diisocyanate;
and
(2) from 0 to about 40% by weight, based on 100% by weight of (A) of an isocyanate-reactive component having from about 2 to about 3 hydroxyl groups capable of reacting with NCO groups of (A)(1) and a molecular weight of about 60 to about 8,000;
and
(B) an isocyanate-reactive component comprising:
(1) from about 45 to about 90 parts by weight of at least one polyether polyol having a functionality of from about 1.5 to about 4.0, and a number average molecular weight to from about 2,000 to about 8,000,
(2) from about 5 to 30 parts by weight of at least one chain extender having a hydroxyl functionality of 2, a number average molecular weight of from about 62 to about 150, and is free of amine groups;
(3) from about 0.5 to about 3.5 parts by weight of at least one chain extender having about 2 amine groups which are primary and/or secondary amine groups, a number average molecular weight of from about 60 to about 400, and is free of hydroxyl groups;
and
(4) from about 3 to about 20 parts by weight of at least one crosslinking agent having from about 3 to about 6 hydroxyl functional groups (preferably secondary OH groups), from 1 to 4 tertiary amine groups, has a number average molecular weight of from about 200 to about 800, and is free of primary and secondary amine groups;
with the sum of (B)(1), (B)(2), (B)(3) and (B)(4) totaling 100 parts by weight of component (B);
in the presence of
(C) a catalyst system comprising at least one metal based catalyst, and, optionally,
(D) one or more additives comprising UV stabilizers and/or antioxidant stabilizers,
wherein the relative amounts of (A) and (B) are such that the Isocyanate Index of the reaction mixture ranges from about 90 to about 110.

2. The process of Claim 1, wherein (A) comprises
(1) from about 80 to about 100% by weight of a (cyclo)aliphatic polyisocyanurate which comprises the trimerization product of isophorone diisocyanate;
and
(2) from about 0 to about 20% by weight of an isocyanate-reactive component.

3. The process of Claim 1, wherein (A)(1) has a functionality of about 2.15 to about 2.40 and an NCO group content of about 26 to about 31%.

4. The process of Claim 1, wherein (A)(2) has from about 2 to about 3 hydroxyl groups capable of reacting with NCO groups of (A)(1) and a molecular weight of about 2,000 to about 8,000.

5. The process of Claim 1, wherein (B) comprises
(1) from about 60 to about 87 parts by weight of at least one polyether polyol having a functionality of about 1.8 to 3.0 and a molecular weight of about 3,000 to about 6,000;
(2) from about 5 to about 30 parts by weight of a chain extender having a molecular weight of about 62 to about 110;
(3) from about 0.5 to about 2.0 parts by weight of at least one chain extender having about 2 amine groups which are primary and/or secondary amine groups, and a molecular weight of about 60 to about 250;
and
(4) from about 5 to about 10 parts by weight of at least one crosslinking agent having about 3 to about 6 hydroxyl groups, from about 1 to about 3 tertiary amine groups and a molecular weight of about 200 to about 500.

6. The process of Claim 1, wherein (B)(2) is selected from the group consisting of ethylene glycol, 2-methyl-1,3-propanediol and mixtures thereof; (B)(3) comprises 1,5-diamino-2-methylpentane; and (B)(4) comprises a propoxylated polyether polyol initiated from a diamine compound and having a molecular weight of 200 to 500.

7. A polyurethane elastomer comprising the reaction product of:
(A) an isocyanate component having an NCO group content of 23 to 34% and a functionality of about 2.1 to about 2.5, and comprising:
(1) from about 60% to 100% by weight, based on 100% by weight of (A), of a (cyclo)aliphatic polyisocyanurate having an NCO group content of about 23% to about 34%, a functionality of about 2.1 to 2.5, and which comprises the trimerization product of isophorone diisocyanate;
and
(2) from 0 to about 40% by weight, based on 100% by weight of (A) of an isocyanate-reactive component having from about 2 to about 3 hydroxyl groups capable of reacting with NCO groups of (A)(1) and a molecular weight of about 60 to about 8,000;
and
(B) an isocyanate-reactive component comprising:
(1) from about 45 to about 90 parts by weight of at least one polyether polyol having a functionality of from about 1.5 to about 4.0, and a number average molecular weight to from about 2,000 to about 8,000,
(2) from about 5 to 30 parts by weight of at least one chain extender having a hydroxyl functionality of 2, a number average molecular weight of from about 62 to about 150, and is free of amine groups;
(3) from about 0.5 to about 3.5 parts by weight of at least one chain extender having about 2 amine groups which are primary and/or secondary amine groups, a number average molecular weight of from about 60 to about 400, and is free of hydroxyl groups;
and
(4) from about 3 to about 20 parts by weight of at least one crosslinking agent having from about 3 to about 6 hydroxyl functional groups (preferably secondary OH groups), from 1 to 4 tertiary amine groups, has a number average molecular weight of from about 200 to about 800, and is free of primary and secondary amine groups;
with the sum of (B)(1), (B)(2), (B)(3) and (B)(4) totaling 100 parts by weight of component (B);
in the presence of
(C) a catalyst system comprising at least one metal based catalyst, and, optionally,
(D) one or more additives comprising UV stabilizers and/or antioxidant stabilizers,
wherein the relative amounts of (A) and (B) are such that the Isocyanate Index of the reaction mixture ranges from about 90 to about 110.

8. The elastomer of Claim 7, wherein (A) comprises
(1) from about 80 to about 100% by weight of a (cyclo)aliphatic polyisocyanurate which comprises the trimerization product of isophorone diisocyanate;
and
(2) from about 0 to about 20% by weight of an isocyanate-reactive component.

9. The elastomer of Claim 7, wherein (A)(1) has a functionality of about 2.15 to about 2.40 and an NCO group content of about 26 to about 31%.

10. The elastomer of Claim 7, wherein (A)(2) has from about 2 to about 3 hydroxyl groups capable of reacting with NCO groups of (A)(1) and a molecular weight of about 2,000 to about 8,000.

11. The elastomer of Claim 7, wherein (B) comprises
(1) from about 60 to about 87 parts by weight of at least one polyether polyol having a functionality of about 1.8 to 3.0 and a molecular weight of about 3,000 to about 6,000;
(2) from about 5 to about 30 parts by weight of a chain extender having a molecular weight of about 62 to about 110;
(3) from about 0.5 to about 2.0 parts by weight of at least one chain extender having about 2 amine groups which are primary and/or secondary amine groups, and a molecular weight of about 60 to about 250;
and
(4) from about 5 to about 10 parts by weight of at least one crosslinking agent having about 3 to about 6 hydroxyl groups, from about 1 to about 3 tertiary amine groups and a molecular weight of about 200 to about 500.

12. The elastomer of Claim 7, wherein (B)(2) is selected from the group consisting of ethylene glycol, 2-methyl-1,3-propanediol and mixtures thereof; (B)(3) comprises 1,5-diamino-2-methylpentane; and (B)(4) comprises a propoxylated polyether polyol initiated from a diamine compound and having a molecular weight of 200 to 500.

13. A phase stable polyol blend comprising:
(1) from about 45 to about 90 parts by weight of at least one polyether polyol having a functionality of from about 1.5 to about 4.0, and a number average molecular weight to from about 2,000 to about 8,000,
(2) from about 5 to 30 parts by weight of a chain extender comprising 2-methyl-1,3-propanediol;
(3) from about 0.5 to about 3.5 parts by weight of at least one chain extender having about 2 amine groups which are primary or secondary amine groups, a number average molecular weight of from about 60 to about 400, and is free of hydroxyl groups;
and
(4) from about 3 to about 20 parts by weight of at least one crosslinking agent having from about 3 to about 6 hydroxyl functional groups (preferably secondary OH groups), from 1 to 4 tertiary amine groups, has a number average molecular weight of from about 200 to about 800, and is free of primary and secondary amine groups;
with the sum of (1), (2), (3) and (4) totaling 100 parts by weight of the polyol blend.

14. The polyol blend of Claim 13 which comprises
(1) from about 60 to about 87 parts by weight of at least one polyether polyol having a functionality of about 1.8 to 3.0 and a molecular weight of about 3,000 to about 6,000;
(2) from about 5 to about 30 parts by weight of a chain extender comprising 2-methyl-1,3-propanediol;
(3) from about 0.5 to about 2.0 parts by weight of at least one chain extender having about 2 amine groups which are primary and/or secondary amine groups, and a molecular weight of about 60 to about 250;
and
(4) from about 5 to about 10 parts by weight of at least one crosslinking agent having about 3 to about 6 hydroxyl groups, from about 1 to about 3 tertiary amine groups and a molecular weight of about 200 to about 500.

15. The polyol blend of Claim 13, wherein (2) is selected from the group consisting of ethylene glycol, 2-methyl-1,3-propanediol and mixtures thereof; (3) comprises 1,5-diamino-2-methylpentane; and (4) comprises a propoxylated polyether polyol initiated from a diamine compound and having a molecular weight of 200 to 500.

## Patentansprüche

1. Verfahren zur Herstellung eines Polyurethanelastomers, welches das Umsetzen eines Reaktionsgemischs mittels eines Reaktionsspritzgussverfahrens umfasst, worin das Reaktionsgemisch Folgendes umfasst:
(A) eine Isocyanatkomponente mit einem NCO-Gruppengehalt von 23 bis 34 % und einer Funktionalität von etwa 2,1 bis etwa 2,5, die Folgendes umfasst:
(1) etwa 60 bis 100 Gew.-%, bezogen auf 100 Gew.-% von (A), eines (cyclo)aliphatischen Polyisocyanurats mit einem NCO-Gruppengehalt von etwa 23 bis etwa 34 % und einer Funktionalität von etwa 2,1 bis 2,5, welches das Trimerisierungsprodukt von Isophorondiisocyanat umfasst;
und
(2) 0 bis etwa 40 Gew.-%, bezogen auf 100 Gew.-% von (A), einer isocyanatreaktiven Komponente mit etwa 2 bis etwa 3 Hydroxylgruppen, die in der Lage sind, mit NCO-Gruppen von (A)(1) zu reagieren, und einem Molekulargewicht von etwa 60 bis etwa 8.000;
und
(B) eine isocyanatreaktive Komponente, die Folgendes umfasst:
(1) etwa 45 bis etwa 90 Gewichtsteile zumindest eines Polyetherpolyols mit einer Funktionalität von etwa 1,5 bis etwa 4,0 und einem zahlenmittleren Molekulargewicht von etwa 2.000 bis etwa 8.000;
(2) etwa 5 bis 30 Gewichtsteile zumindest eines Kettenverlängerers mit einer Hydroxylfunktionalität von 2 und einem zahlenmittleren Molekulargewicht von etwa 62 bis etwa 150, der frei von Amingruppen ist;
(3) etwa 0,5 bis etwa 3,5 Gewichtsteile zumindest eines Kettenverlängerers mit etwa 2 Amingruppen, die primäre und/oder sekundäre Amingruppen sind, und einem zahlenmittleren Molekulargewicht von etwa 60 bis etwa 400, der frei von Hydroxylgruppen ist;
und
(4) etwa 3 bis etwa 20 Gewichtsteile zumindest eines Vernetzers mit etwa 3 bis etwa 6 hydroxylfunktionellen Gruppen (vorzugsweise sekundären OH-Gruppen), 1 bis 4 tertiären Amingruppen und einem zahlenmittleren Molekulargewicht von etwa 200 bis etwa 800, der frei von primären und sekundären Amingruppen ist;
wobei die Summe aus (B)(1), (B)(2), (B)(3) und (B)(4) 100 Gewichtsteile der Komponente (B) ergibt;
und zwar in Gegenwart von:
(C) einem Katalysatorsystem, das zumindest einen auf Metall basierenden Katalysator umfasst, und gegebenenfalls
(D) einem oder mehreren Additiven, die UV-Stabilisatoren und/oder Antioxidansstabilisatoren umfassen,
worin die relative Menge von (A) und (B) so gewählt ist, dass der Isocyanatindex des Reaktionsgemischs im Bereich von etwa 90 bis etwa 110 liegt.

2. Verfahren nach Anspruch 1, worin (A) Folgendes umfasst:
(1) etwa 80 bis etwa 100 Gew.-% eines (cyclo)aliphatischen Polyisocyanurats, welches das Trimerisierungsprodukt von Isophorondiisocyanat umfasst;
und
(2) etwa 0 bis etwa 20 Gew.-% einer isocyanatreaktiven Komponente.

3. Verfahren nach Anspruch 1, worin (A)(1) eine Funktionalität von etwa 2,15 bis etwa 2,40 und einen NCO-Gruppengehalt von etwa 26 bis etwa 31 % aufweist.

4. Verfahren nach Anspruch 1, worin (A)(2) etwa 2 bis etwa 3 Hydroxylgruppen, die in der Lage sind, mit NCO-Gruppen von (A)(1) zu reagieren, und ein Molekulargewicht von etwa 2.000 bis etwa 8.000 aufweist.

5. Verfahren nach Anspruch 1, worin (B) Folgendes umfasst:
(1) etwa 60 bis etwa 87 Gewichtsteile zumindest eines Polyetherpolyols mit einer Funktionalität von etwa 1,8 bis 3,0 und einem Molekulargewicht von etwa 3.000 bis etwa 6.000;
(2) etwa 5 bis etwa 30 Gewichtsteile eines Kettenverlängerers mit einem Molekulargewicht von etwa 62 bis etwa 110;
(3) etwa 0,5 bis etwa 2,0 Gewichtsteile zumindest eines Kettenverlängerers mit etwa 2 Amingruppen, die primäre und/oder sekundäre Amingruppen sind, und einem Molekulargewicht von etwa 60 bis etwa 250;
und
(4) etwa 5 bis etwa 10 Gewichtsteile zumindest eines Vernetzers mit etwa 3 bis etwa 6 Hydroxylgruppen, etwa 1 bis etwa 3 tertiären Amingruppen und einem Molekulargewicht von etwa 200 bis etwa 500.

6. Verfahren nach Anspruch 1, worin (B)(2) aus der aus Ethylenglykol, 2-Methyl-1,3-propandiol und Gemischen davon bestehenden Gruppe ausgewählt ist; (B)(3) 1,5-Diamino-2-methylpentan umfasst; und (B)(4) ein propoxyliertes Polyetherpolyol umfasst, das durch eine Diaminverbindung initiiert ist und ein Molekulargewicht von 200 bis 500 aufweist.

7. Polyurethanelastomer, welches das Reaktionsprodukt von:
(A) einer Isocyanatkomponente mit einem NCO-Gruppengehalt von 23 bis 34 % und einer Funktionalität von etwa 2,1 bis etwa 2,5, die Folgendes umfasst:
(1) etwa 60 bis 100 Gew.-%, bezogen auf 100 Gew.-% von (A), eines (cyclo)aliphatischen Polyisocyanurats mit einem NCO-Gruppengehalt von etwa 23 bis etwa 34 % und einer Funktionalität von etwa 2,1 bis 2,5, welches das Trimerisierungsprodukt von Isophorondiisocyanat umfasst;
und
(2) 0 bis etwa 40 Gew.-%, bezogen auf 100 Gew.-% von (A), einer isocyanatreaktiven Komponente mit etwa 2 bis etwa 3 Hydroxylgruppen, die in der Lage sind, mit NCO-Gruppen von (A)(1) zu reagieren, und einem Molekulargewicht von etwa 60 bis etwa 8.000;
und
(B) einer isocyanatreaktiven Komponente, die Folgendes umfasst:
(1) etwa 45 bis etwa 90 Gewichtsteile zumindest eines Polyetherpolyols mit einer Funktionalität von etwa 1,5 bis etwa 4,0 und einem zahlenmittleren Molekulargewicht von etwa 2.000 bis etwa 8.000;
(2) etwa 5 bis 30 Gewichtsteile zumindest eines Kettenverlängerers mit einer Hydroxylfunktionalität von 2 und einem zahlenmittleren Molekulargewicht von etwa 62 bis etwa 150, der frei von Amingruppen ist;
(3) etwa 0,5 bis etwa 3,5 Gewichtsteile zumindest eines Kettenverlängerers mit etwa 2 Amingruppen, die primäre und/oder sekundäre Amingruppen sind, und einem zahlenmittleren Molekulargewicht von etwa 60 bis etwa 400, der frei von Hydroxylgruppen ist;
und
(4) etwa 3 bis etwa 20 Gewichtsteile zumindest eines Vernetzers mit etwa 3 bis etwa 6 hydroxylfunktionellen Gruppen (vorzugsweise sekundären OH-Gruppen), 1 bis 4 tertiären Amingruppen und einem zahlenmittleren Molekulargewicht von etwa 200 bis etwa 800, der frei von primären und sekundären Amingruppen ist;
wobei die Summe aus (B)(1), (B)(2), (B)(3) und (B)(4) 100 Gewichtsteile der Komponente (B) ergibt;
in Gegenwart von:
(C) einem Katalysatorsystem, das zumindest einen auf Metall basierenden Katalysator umfasst, und gegebenenfalls
(D) einem oder mehreren Additiven, die UV-Stabilisatoren und/oder Antioxidansstabilisatoren umfassen,
worin die relative Menge von (A) und (B) so gewählt ist, dass der Isocyanatindex des Reaktionsgemischs im Bereich von etwa 90 bis etwa 110 liegt,
umfasst.

8. Elastomer nach Anspruch 7, worin (A) Folgendes umfasst:
(1) etwa 80 bis etwa 100 Gew.-% eines (cyclo)aliphatischen Polyisocyanurats, welches das Trimerisierungsprodukt von Isophorondiisocyanat umfasst;
und
(2) etwa 0 bis etwa 20 Gew.-% einer isocyanatreaktiven Komponente.

9. Elastomer nach Anspruch 7, worin (A)(1) eine Funktionalität von etwa 2,15 bis etwa 2,40 und einen NCO-Gruppengehalt von etwa 26 bis etwa 31 % aufweist.

10. Elastomer nach Anspruch 7, worin (A)(2) etwa 2 bis etwa 3 Hydroxylgruppen, die in der Lage sind, mit NCO-Gruppen von (A)(1) zu reagieren, und ein Molekulargewicht von etwa 2.000 bis etwa 8.000 aufweist.

11. Elastomer nach Anspruch 7, worin (B) Folgendes umfasst:
(1) etwa 60 bis etwa 87 Gewichtsteile zumindest eines Polyetherpolyols mit einer Funktionalität von etwa 1,8 bis 3,0 und einem Molekulargewicht von etwa 3.000 bis etwa 6.000;
(2) etwa 5 bis etwa 30 Gewichtsteile eines Kettenverlängerers mit einem Molekulargewicht von etwa 62 bis etwa 110;
(3) etwa 0,5 bis etwa 2,0 Gewichtsteile zumindest eines Kettenverlängerers mit etwa 2 Amingruppen, die primäre und/oder sekundäre Amingruppen sind, und einem Molekulargewicht von etwa 60 bis etwa 250;
und
(4) etwa 5 bis etwa 10 Gewichtsteile zumindest eines Vernetzers mit etwa 3 bis etwa 6 Hydroxylgruppen, etwa 1 bis etwa 3 tertiären Amingruppen und einem Molekulargewicht von etwa 200 bis etwa 500.

12. Elastomer nach Anspruch 7, worin (B)(2) aus der aus Ethylenglykol, 2-Methyl-1,3-propandiol und Gemischen davon bestehenden Gruppe ausgewählt ist; (B)(3) 1,5-Diamino-2-methylpentan umfasst; und (B)(4) ein propoxyliertes Polyetherpolyol umfasst, das durch eine Diaminverbindung initiiert ist und ein Molekulargewicht von 200 bis 500 aufweist.

13. Phasenstabile Polyolmischung, die Folgendes umfasst:
(1) etwa 45 bis etwa 90 Gewichtsteile zumindest eines Polyetherpolyols mit einer Funktionalität von etwa 1,5 bis etwa 4,0 und einem zahlenmittleren Molekulargewicht von etwa 2.000 bis etwa 8.000;
(2) etwa 5 bis 30 Gewichtsteile eines Kettenverlängerers, der 2-Methyl-1,3-propandiol umfasst;
(3) etwa 0,5 bis etwa 3,5 Gewichtsteile zumindest eines Kettenverlängerers mit etwa 2 Amingruppen, die primäre oder sekundäre Amingruppen sind, und einem zahlenmittleren Molekulargewicht von etwa 60 bis etwa 400, der frei von Hydroxylgruppen ist;
und
(4) etwa 3 bis etwa 20 Gewichtsteile zumindest eines Vernetzers mit etwa 3 bis etwa 6 hydroxylfunktionellen Gruppen (vorzugsweise sekundären OH-Gruppen), 1 bis 4 tertiären Amingruppen und einem zahlenmittleren Molekulargewicht von etwa 200 bis etwa 800, der frei von primären und sekundären Amingruppen ist;
wobei die Summe aus (1), (2), (3) und (4) 100 Gewichtsteile der Polyolmischung ergibt.

14. Polyolmischung nach Anspruch 13, die Folgendes umfasst:
(1) etwa 60 bis etwa 87 Gewichtsteile zumindest eines Polyetherpolyols mit einer Funktionalität von etwa 1,8 bis 3,0 und einem Molekulargewicht von etwa 3.000 bis etwa 6.000;
(2) etwa 5 bis etwa 30 Gewichtsteile zumindest eines Kettenverlängerers, der 2-Methyl-1,3-propandiol umfasst;
(3) etwa 0,5 bis etwa 2,0 Gewichtsteile zumindest eines Kettenverlängerers mit etwa 2 Amingruppen, die primäre und/oder sekundäre Amingruppen sind, und einem Molekulargewicht von etwa 60 bis etwa 250;
und
(4) etwa 5 bis etwa 10 Gewichtsteile zumindest eines Vernetzers mit etwa 3 bis etwa 6 Hydroxylgruppen, etwa 1 bis etwa 3 tertiären Amingruppen und einem Molekulargewicht von etwa 200 bis etwa 500.

15. Polyolmischung nach Anspruch 13, worin (2) aus der aus Ethylenglykol, 2-Methyl-1,3-propandiol und Gemischen davon bestehenden Gruppe ausgewählt ist; (3) 1,5-Diamino-2-methylpentan umfasst; und (4) ein propoxyliertes Polyetherpolyol umfasst, das durch eine Diaminverbindung initiiert ist und ein Molekulargewicht von 200 bis 500 aufweist.

## Revendications

1. Procédé de production d'un élastomère de poly(uréthane) comprenant la réaction d'un mélange de réaction par une technique de moulage par injection de réaction, dans lequel le mélange de réaction comprend :
(A) un composant isocyanate ayant une teneur en groupe NCO de 23 à 34 % et une fonctionnalité d'environ 2,1 à environ 2,5, et comprenant :
(1) d'environ 60 % à 100 % en poids, pour 100 % en poids de (A), d'un poly(isocyanurate) (cyclo)aliphatique ayant une teneur en groupe NCO d'environ 23 % à environ 34 %, une fonctionnalité d'environ 2,1 à 2,5 et qui comprend le produit de trimérisation de diisocyanate d'isophorone ;
et
(2) de 0 à environ 40 % en poids, pour 100 % en poids de (A) d'un composé réactif en vers l'isocyanate ayant d'environ 2 à environ 3 groupes hydroxyle capables de réagir avec des groupes NCO de (A)(1) et une masse moléculaire d'environ 60 à environ 8 000 ;
et
(B) un composant réactif envers l'isocyanate comprenant :
(1) d'environ 45 à environ 90 parties en poids d'au moins un poly(éther) polyol ayant une fonctionnalité d'environ 1,5 à environ 4,0 et une masse moléculaire moyenne en nombre d'environ 2 000 à environ 8 000,
(2) d'environ 5 à 30 parties en poids d'au moins un agent d'allongement de chaîne ayant une fonctionnalité hydroxyle de 2, une masse moléculaire moyenne en nombre d'environ 62 à environ 150, et qui est dépourvu de groupes amine ;
(3) d'environ 0,5 à 3,5 parties en poids d'au moins un agent d'allongement de chaîne comportant environ 2 groupes amine qui sont des groupes amine primaires et/ou secondaires, une masse moléculaire moyenne en nombre d'environ 60 à environ 400, et est dépourvu de groupes hydroxyle ;
et
(4) d'environ 3 à environ 20 parties en poids d'au moins un agent de réticulation comportant d'environ 3 à environ 6 groupes fonctionnels hydroxyle (de préférence des groupes OH secondaires), de 1 à 4 groupes amine tertiaires, qui a une masse moléculaire moyenne en nombre d'environ 200 à environ 800, et est dépourvu de groupes amine primaires et secondaires ;
où la somme de (B)(1), (B)(2), (B)(3) et (B)(4) est égale à 100 parties en poids du composant (B) ;
en présence
(C) d'un système de catalyseur comprenant au moins un catalyseur à base de métal, et facultativement,
(D) d'un ou plusieurs additifs comprenant des stabilisants aux UV et/ou des stabilisants aux antioxydants,
où les quantités relatives de (A) et (B) sont telles que l'indice d'isocyanate de mélange de réaction varie d'environ 90 à environ 110.

2. Procédé selon la revendication 1, dans lequel (A) comprend
(1) d'environ 80 à environ 100 % en poids d'un poly(isocyanurate) (cyclo)aliphatique qui comprend le produit de trimérisation de diisocyanate d'isophorone ;
et
(2) d'environ 0 à environ 20 % en poids d'un composant réactif envers l'isocyanate.

3. Procédé selon la revendication 1, dans lequel (A)(1) a une fonctionnalité d'environ 2,15 à environ 2,40 et une teneur en groupe NCO d'environ 26 à environ 31 %.

4. Procédé selon la revendication 1, dans lequel (A)(2) a d'environ 2 à environ 3 groupes hydroxyle capables de réagir avec des groupes NCO de (A)(1) et une masse moléculaire d'environ 2 000 à environ 8 000.

5. Procédé selon la revendication 1, dans lequel (B) comprend
(1) d'environ 60 à environ 87 parties en poids d'au moins un poly(éther) polyol ayant une fonctionnalité d'environ 1,8 à 3,0 et une masse moléculaire d'environ 3 000 à environ 6 000 ;
(2) d'environ 5 à environ 30 parties en poids d'un agent d'allongement de chaîne ayant une masse moléculaire d'environ 62 à environ 110 ;
(3) d'environ 0,5 à environ 2,0 parties en poids d'au moins un agent d'allongement de chaîne ayant environ 2 groupes amine qui sont des groupes amine primaires et/ou secondaires, et une masse moléculaire d'environ 60 à environ 250 ;
et
(4) d'environ 5 à environ 10 parties en poids d'au moins un agent de réticulation ayant environ 3 à environ 6 groupes hydroxyle, d'environ 1 à environ 3 groupes amine tertiaires et une masse moléculaire d'environ 200 à environ 500.

6. Procédé selon la revendication 1, dans lequel (B)(2) est choisi dans le groupe consistant en l'éthylène glycol, le 2-méthyl-1,3-propanediol et leurs mélanges ; (B)(3) comprend le 1,5-diamino-2-méthylpentane ; et (B)(4) comprend un poly(éther) polyol propoxylé initié à partir d'un composé diamine et ayant une masse moléculaire de 200 à 500.

7. Elastomère de poly(uréthane) comprenant le produit de réaction de :
(A) un composant isocyanate ayant une teneur en groupe NCO de 23 à 34 % et une fonctionnalité d'environ 2,1 à environ 2,5, et comprenant :
(1) d'environ 60 % à 100 % en poids, pour 100 % en poids de (A), d'un poly(isocyanurate) (cyclo)aliphatique ayant une teneur en groupe NCO d'environ 23 % à environ 34 %, une fonctionnalité d'environ 2,1 à 2,5 et qui comprend le produit de trimérisation de diisocyanate d'isophorone ;
et
(2) de 0 à environ 40 % en poids, pour 100 % en poids de (A) d'un composé réactif envers l'isocyanate ayant d'environ 2 à environ 3 groupes hydroxyle capables de réagir avec des groupes NCO de (A)(1) et une masse moléculaire d'environ 60 à environ 8 000 ;
et
(B) un composant réactif envers l'isocyanate comprenant :
(1) d'environ 45 à environ 90 parties en poids d'au moins un poly(éther) polyol ayant une fonctionnalité d'environ 1,5 à environ 4,0 et une masse moléculaire moyenne en nombre d'environ 2 000 à environ 8 000,
(2) d'environ 5 à 30 parties en poids d'au moins un agent d'allongement de chaîne ayant une fonctionnalité hydroxyle de 2, une masse moléculaire moyenne en nombre d'environ 62 à environ 150, et qui est dépourvu de groupes amine ;
(3) d'environ 0,5 à 3,5 parties en poids d'au moins un agent d'allongement de chaîne ayant environ 2 groupes amine qui sont des groupes amine primaires et/ou secondaires, une masse moléculaire moyenne en nombre d'environ 60 à environ 400, et qui est dépourvu de groupes hydroxyle ;
et
(4) d'environ 3 à environ 20 parties en poids d'au moins un agent de réticulation comportant d'environ 3 à environ 6 groupes fonctionnels hydroxyle (de préférence des groupes OH secondaires), de 1 à 4 groupes amine tertiaires, qui a une masse moléculaire moyenne en nombre d'environ 200 à environ 800, et est dépourvu de groupes amine primaires et secondaires ;
où la somme de (B)(1), (B)(2), (B)(3) et (B)(4) est égale à 100 parties en poids du composant (B) ;
en présence
(C) d'un système de catalyseur comprenant au moins un catalyseur à base de métal, et facultativement,
(D) d'un ou plusieurs additifs comprenant des stabilisants aux UV et/ou des stabilisants aux antioxydants,
où les quantités relatives de (A) et (B) sont telles que l'indice d'isocyanate du mélange de réaction varie d'environ 90 à environ 110.

8. Elastomère selon la revendication 7, dans lequel (A) comprend
(1) d'environ 80 à environ 100 % en poids d'un poly(isocyanurate) (cyclo)aliphatique qui comprend le produit de trimérisation de diisocyanate d'isophorone ;
et
(2) d'environ 0 à environ 20 % en poids d'un composant réactif en vers l'isocyanate.

9. Elastomère selon la revendication 7, dans lequel (A)(1) a une fonctionnalité d'environ 2,15 à environ 2,40 et une teneur en groupe NCO d'environ 26 à environ 31 %.

10. Elastomère selon la revendication 7, dans lequel (A)(2) a d'environ 2 à environ 3 groupes hydroxyle capables de réagir avec des groupes NCO de (A)(1) et une masse moléculaire d'environ 2 000 à environ 8 000.

11. Elastomère selon la revendication 7, dans lequel (B) comprend
(1) d'environ 60 à environ 87 parties en poids d'au moins un poly(éther) polyol ayant une fonctionnalité d'environ 1,8 à 3,0 et une masse moléculaire d'environ 3 000 à environ 6 000 ;
(2) d'environ 5 à environ 30 parties en poids d'un agent d'allongement de chaîne ayant une masse moléculaire d'environ 62 à environ 110 ;
(3) d'environ 0,5 à environ 2,0 parties en poids d'au moins un agent d'allongement de chaîne ayant environ 2 groupes amine qui sont des groupes amine primaires et/ou secondaires, et une masse moléculaire d'environ 60 à environ 250 ;
et
(4) d'environ 5 à environ 10 parties en poids d'au moins un agent de réticulation ayant environ 3 à environ 6 groupes hydroxyle, d'environ 1 à environ 3 groupes amine tertiaires et une masse moléculaire d'environ 200 à environ 500.

12. Elastomère selon la revendication 7 dans lequel (B)(2) est choisi dans le groupe consistant en l'éthylène glycol, le 2-méthyl-1,3-propanediol et leurs mélanges; (B)(3) comprend le 1,5-diamino-2-méthylpentane ; et (B)(4) comprend un poly(éther) polyol propoxylé initié à partir d'un composé diamine et ayant une masse moléculaire de 200 à 500.

13. Mélange de polyol à phase stable comprenant :
(1) d'environ 45 à environ 90 parties en poids d'au moins un poly(éther) polyol ayant une fonctionnalité d'environ 1,5 à environ 4,0, et une masse moléculaire moyenne en nombre d'environ 2 000 à environ 8 000,
(2) d'environ 5 à 30 parties en poids d'un agent d'allongement de chaîne comprenant le 2-méthyl-1,3-propanediol ;
(3) d'environ 0,5 à environ 3,5 parties en poids d'au moins un agent d'allongement de chaîne ayant environ 2 groupes amine qui sont des groupes amine primaires ou secondaires, une masse moléculaire moyenne en nombre d'environ 60 à environ 400, et qui est dépourvu de groupes hydroxyle ;
et
(4) d'environ 3 à environ 20 parties en poids d'au moins un agent de réticulation comportant d'environ 3 à environ 6 groupes fonctionnels hydroxyle (de préférence des groupes OH secondaires), de 1 à 4 groupes amine tertiaires, qui a une masse moléculaire moyenne en nombre d'environ 200 à environ 800, et est dépourvu de groupes amine primaires et secondaires ;
où la somme de (1), (2), (3) et (4) est égale à 100 parties en poids du mélange de polyol.

14. Mélange de polyol selon la revendication 13, qui comprend
(1) d'environ 60 à environ 87 parties en poids d'au moins un poly(éther) polyol ayant une fonctionnalité d'environ 1,8 à 3,0 et une masse moléculaire d'environ 3 000 à environ 6 000 ;
(2) d'environ 5 à environ 30 parties en poids d'un agent d'allongement de chaîne comprenant le 2-méthyl-1,3-propanediol ;
(3) d'environ 0,5 à environ 2,0 parties en poids d'au moins un agent d'allongement de chaîne ayant environ 2 groupes amine qui sont des groupes amine primaires et/ou secondaires, et une masse moléculaire d'environ 60 à environ 250 ;
et
(4) d'environ 5 à environ 10 parties en poids d'au moins un agent de réticulation ayant environ 3 à environ 6 groupes hydroxyle, d'environ 1 à environ 3 groupes amine tertiaires et une masse moléculaire d'environ 200 à environ 500.

15. Mélange de polyol selon la revendication 13, dans lequel (2) est choisi dans le groupe consistant en l'éthylène glycol, le 2-méthyl-1,3-propanediol et leurs mélanges ; (3) comprend le 1,5-diamino-2-métylpentane ; et (4) comprend un poly(éther) polyol propoxylé initié à partir d'un composé diamine et ayant une masse moléculaire de 200 à 500.
